# EUROPEAN PATENT SPECIFICATION

(11) **EP 0 472 652 B1**
(45) Date of publication and mention of the grant of the patent: **08.03.1995**
(21) Application number: 90908887.4
(22) Date of filing: 11.05.1990
(51) Int. Cl.: F16L 37/28

(54) **IMPROVED QUICK DISCONNECT COUPLING**
VERBESSERTE LÖSBARE SCHNELLKUPPLUNG
ACCOUPLEMENT A DECONNEXION RAPIDE AMELIORE

(30) Priority: 19.05.1989 US 354611
(43) Date of publication of application: 04.03.1992
(73) Proprietor: SNAP-TITE, INC., Erie, PA 16505 (US)
(72) Inventor: WILCOX, Wayne, Union City, PA 16438 (US)
(74) Representative: Jones, Stephen Anthony
(86) International application number: US9002576
(87) International publication number: WO9014547

(56) References cited:
- WO-A-89/01587
- GB-A- 0 610 652
- US-A- 3 074 430
- US-A- 4 597 413
- US-A- 4 742 850
- US-A- 4 768 551

## Description

The present invention relates to high reliability subsea couplers for hydraulic fluid lines. In particular, it relates to such couplers which have check valves in each of the mating parts and metal seals to prevent the escape of hydraulic fluid.

### Background of the Invention

In undersea fluid pressure transmission lines, as for petroleum operations, high reliability is very important. Typically a number of coupler halves are mounted perpendicularly to a plate or mounting base, with the mating half of each coupler mounted on one or more parallel opposing plates, so that all couplings mate at the same time. Metal-to-metal seals are preferably used for reliability and strength. Examples of such couplers are seen in US Patents No 4,637,470 to Weathers et al., 4,694,859 to Smith and 4,709,726 to Fitzgibbons. Typically the metal seal will be C-shaped, as in the Smith and Fitzgibbons patents, or V-shaped as in the Weathers connector design. US 4,597,413 discloses a coupler for joining a first and second source of a fluid. The coupler comprises a coupler assembly and a nipple assembly. The coupler assembly includes a coupler passage extending between first and second coupler fluid ports. Sleeve means are urged by a spring to close the second coupler fluid port. The nipple assembly includes a nipple passage extending between first and second nipple fluid ports. Nipple sleeve means are urged by a spring to close the second nipple fluid port. The nipple assembly can be inserted into the coupler assembly against the action of the springs to a position in which all the fluid ports are open and the second coupler and nipple fluid ports are in communication.

WO 89/01587 discloses a coupling assembly with a redundant valving system. Two rotatable valve assemblies are provided, within the coupler body and the nipple body, which are opened when the nipple is inserted into the coupler.

A coupling arrangement is needed in which the high internal pressure will not tend to cause uncoupling. This will permit the mounting plates, and the means holding the couplers together, to be of lighter construction and will lessen the possibility of mishap. It is for this purpose that the present invention has been made. This is achieved by a device according to claim 1.
- Figure 1: is a lengthwise sectional view of a preferred embodiment of the coupler of the present invention as connected;
- Figure 2: is a lengthwise sectional view of the left or coupler half of the coupler seen in Figure 1; and
- Figure 3: is a lengthwise sectional view of the right or nipple half of the same coupler.

### Detailed Description of a Preferred Embodiment of the Invention

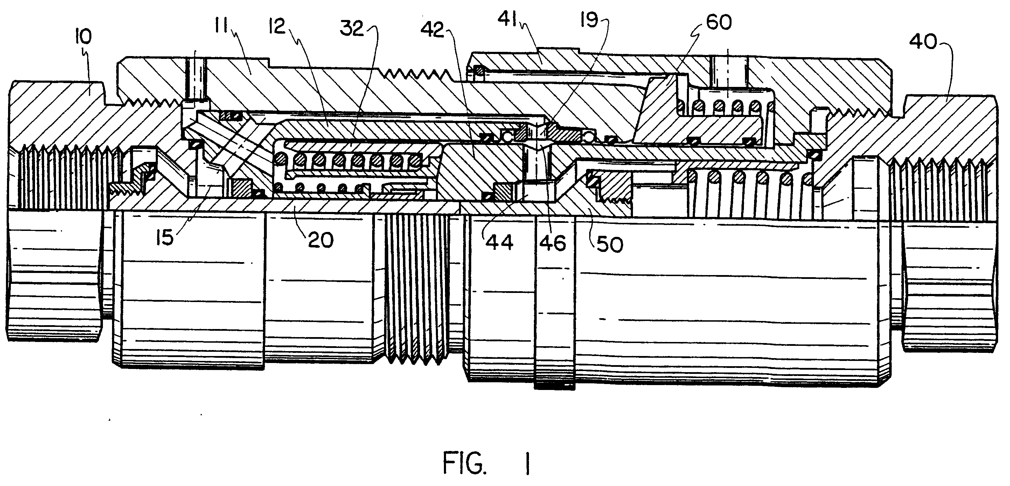

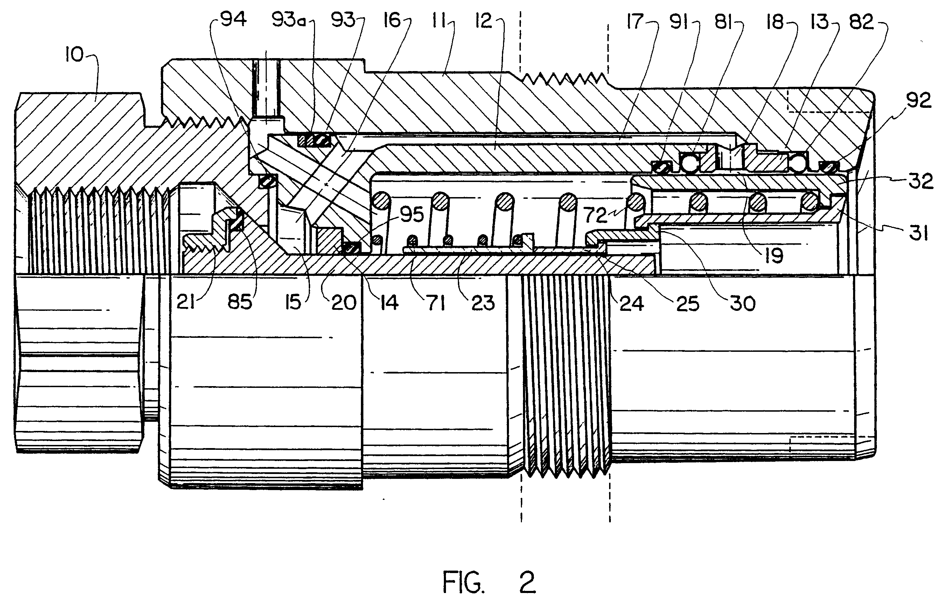

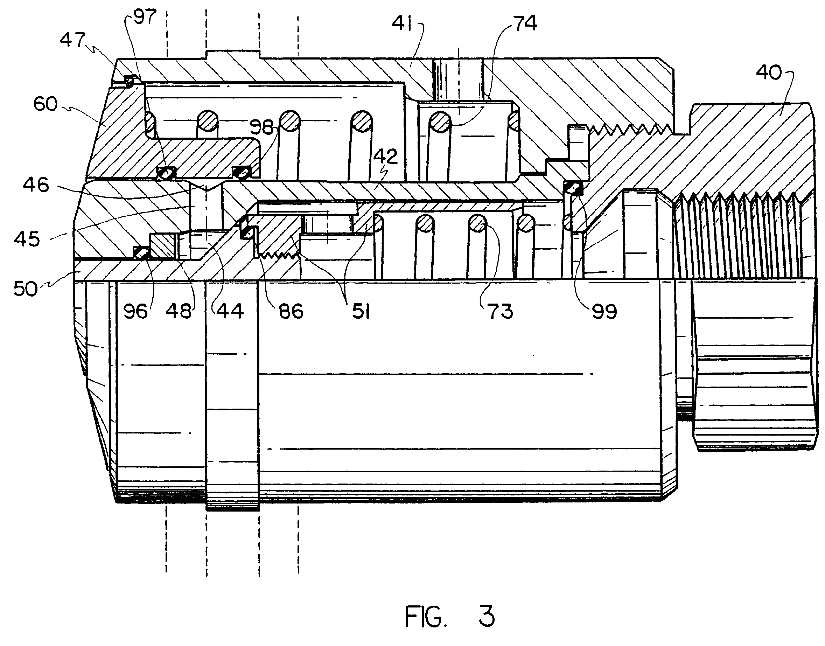

In Figure 1, the presently preferred embodiment of the connected coupler is shown, and in Figures 2 and 3 the left and right halves, respectively.

In the left or "coupler" assembly half, best seen in Figure 2, there are three groups of generally cylindrical components, each group moving essentially as a unit and performing its function cooperatively.

On the extreme left is a coupler adaptor 10 which connects the coupler assembly to a left-hand fluid source. A coupler body 11 is connected to it, preferably by screw threads, and radially inside coupler body 10 is a cage 12. A first cage seal retainer 13 is interposed between cage 12 and coupler body 11, and a second cage seal retainer 14 is press-fitted into cage 12. As will be seen from the drawing, cage 12 and cage seal retainers 13 and 14 interfit with coupler adaptor 10 and coupler body 11 so that all "move together" (in practice, they are stationary) as one unit. This unit, which may be called the coupler body, serves primarily to provide a passage for the fluid to and from the left hand fluid source. This passage consists of a left coupler port 15, a duct or ducts 16 in cage 12, a cylindrical section 17 between cage 12 and coupler body 11, and a duct or ducts 18 in cage seal retainer 13, ending at right coupler port 19.

The coupler body also serves to provide support for the various other components, springs and seals to be mentioned, and has additional ducts connecting the outside (seawater) environment with its interior portions. It should be noted that the additional duct or ducts in cage 12 are offset from the fluid duct or ducts 15 and not connected with it or them.

At the center of the coupler half is a coupler valve 20, in the preferred embodiment of the poppet type, covering left coupler port 15 which is proximal to the left fluid source. Coupler valve seal retainer 21 is threaded to it as shown. Cylindrical sleeves 23 and 24 surround the stem portion of coupler valve 20, which fits slidingly into second cage seal retainer 14. A snap ring 25, fitting into a groove in coupler valve 20, restrains cylindrical sleeve 24, and with it sleeve 23, from rightward movement with respect to coupler valve 20. Leftward movement is restrained by a spring 71 to be discussed. It can thus be seen that coupler valve 20, seal retainer 21 and sleeves 23 and 24 move as a unit. Its primary function is to open and close left coupler port 15; it also serves to support the telescoping sliding sleeve next to be discussed.

The telescoping sliding sleeve arrangement consists of three parts. A first telescoping sleeve component 30 slides along the outside of cylindrical sleeve 24 and is restricted from sliding off it to the right by mating shoulders on the respective sleeves. Second telescoping sleeve component 31 engages sleeve component 30 in the same manner. Third telescoping sleeve component 32 engages sleeve component 31 non-slidingly, being restricted from rightward movement by the contact of mating shoulders on it and component 31 and being restricted from leftward movement, to the same extent as component 31, by a spring 72. As Figure 2 shows, in the uncoupled position of the coupler, telescoping sleeve component 32 overlies and seals off right coupler port 19, distal to the left fluid source.

Referring to Figure 3, the right or "nipple" assembly half of the coupler also has three groups of cooperating components. The first one, or nipple body assembly, consists in the preferred embodiment of a nipple adaptor 40, a nipple housing 41 screw-threaded to it, a nipple 42 interfitting between the first two named components, a sleeve retaining ring 47, and a nipple seal retainer 48. The nipple body assembly, all components of which are stationary with respect to each other, serves the same functions as the coupler body already described. In particular, it has a first or proximal nipple port 44 between nipple 42 and the right fluid source, which is connected by a duct 45 to a second or distal nipple port 46. As seen in Figure 1, the right coupler port 19 and second nipple port 46 are located so as to be in communication when the coupler is connected.

Also analogously to the left half, the nipple assembly has a nipple valve 50 covering first nipple port 44. A nipple retainer 57, which also retains a seal to be discussed, is threaded to it.

The second nipple port 46 is closed in the uncoupled configuration by a sliding sleeve 60 which is urged leftward by a spring 74 but retained at the end of its leftward travel by sleeve retaining ring 47. As will be seen in Figure 3, the nipple body assembly is provided with ducting connecting the outside environment with its interior, similarly to the coupler body. This ducting is of course to permit the retraction and extension of the sleeve assemblies.

In the interiors of the coupler halves are a first spring 71, urging the coupler valve 20 to close left coupler port 15, a second spring 72 urging the telescoping sliding sleeve to close right coupler port 19, a third spring 73 urging the nipple valve 50 to close first nipple port 44 and a fourth spring 74 urging sliding sleeve 60 to close second nipple port 46.

Various metal and elastomeric seals are provided. The most important ones are a first and second metal seal, 81 and 82 respectively, one located on each side of right coupler port 19. In the preferred embodiment these are C-shaped, but it will be clear to those skilled in the art that other shapes may be employed. The diameters of seals 81 and 82 on each side of the pressure source are identical, so there is no net separation force tending to separate the coupler. Metal seals 81 and 82 are backed up by first and second secondary elastomeric O-ring seals 91 and 92 respectively. Other elastomeric O-rings 93, 94 and 95 are interposed between the fluid ducts and the seawater ducts as seen in Figure 2. O-ring 93 is supported by a Teflon^{R} back-up ring 93a. In the nipple half there are elastomeric O-rings 96 between nipple valve 50 and the nipple 42, 97 and 98 between the nipple 42 and sliding sleeve 60, and 99 between nipple adaptor 40 and nipple 42. Finally, L-shaped elastomeric seals 85 and 86 are used to seal the poppet valve seats; seal 85 is mounted between coupler valve 20 and its seal retainer 21 and seal 86 between nipple valve 50 and nipple seal retainer 48.

When the coupler halves are abutted and pushed together, as seen in Figure 1, the sliding sleeve 60 retracts rightwardly, the telescoping sliding sleeve arrangement in the left half retracts leftwardly, and the respective body halves interfit to juxtapose the distal fluid ports 19 and 46. At approximately the same time, nipple valve 50 abuts coupler valve 20 and both are unseated, opening the proximal fluid ports 15 and 44, and completing the fluid pathway between the left and right.

Because of the design of the fluid passages in the closed coupler, there is no net separation force on the passage walls tending to separate the coupler as there is in most of the prior art designs.

When the coupler is uncoupled, both sliding sleeves are again urged forward sealing the distal ports and preventing the ingress of sea water or other contaminants.

## Claims

1. A coupling comprising
a coupler half with coupler body means having a coupler passage for fluid from a first fluid line, said coupler passage having a proximal coupler fluid port (15) between it and said first fluid line, a distal coupler fluid port (19), distal to said first fluid line, in a coupler port bearing member, sliding coupler valve means (32) sliding over said distal coupler fluid port (19), second coupler valve means (20) urged by first spring means (71) to close said proximal coupler fluid port (15), and said sliding coupler valve means (32) being urged by second spring means (72) to close said distal coupler fluid port (19), and first and second metal seals (81,82) on opposite sides of said distal coupler fluid port (19), said metal seals (81,82) sealing between said coupler port bearing member and said sliding coupler valve means (32); and
a nipple half with nipple body means having a nipple passage therein for said fluid, said nipple passage having a proximal nipple fluid port (44) between it and a second fluid line, a distal nipple fluid port (46), distal to the second fluid line, in a nipple port bearing member, sliding nipple valve means (60) sliding over said distal nipple fluid port (46), second nipple valve means (50) urged by third spring means (73) to close said proximal nipple fluid port (44), and said sliding nipple valve means (60) being urged by fourth spring means (74) to close said distal nipple fluid port (46), and third and fourth seals (97,98) on opposite sides of said distal nipple fluid port (46), said seals (97,98) sealing between said nipple port bearing member and said sliding nipple valve means (60);
said nipple half being insertable into said coupler half against the action of said first through fourth spring means (71,72,73,74) to a position in which said sliding coupler valve means (32) and said sliding nipple valve means (60) are retracted, all of said fluid ports (15,19,44,46) are open and said distal coupler fluid port (19) and said distal nipple fluid port (46) are in communication.

2. A coupling as claimed in Claim 1, wherein said metal seals (81,82) are of C-shaped cross-section, and of identical diameter.

3. A coupling as claimed in Claim 1 or Claim 2, wherein there are further provided elastomeric seals sealing between said coupler port bearing member and said sliding coupler valve means (32).

4. A coupling as claimed in any preceding claim, wherein when said coupler half and said nipple half are connected such that all of said fluid ports (15,19,44,46) are open, flow of fluid through said distal coupler fluid port (19) and said distal nipple fluid port (46) is substantially perpendicular to the longitudinal axis of the coupling.

## Patentansprüche

1. Kupplung, die aufweist:
eine Kupplungshälfte mit einem Kupplungsgehäuse, das einen Kupplungsdurchgang für die Flüssigkeit aus einer ersten Flüssigkeitsleitung aufweist, wobei der Kupplungsdurchgang eine proximale Kupplungsflüssigkeitsöffnung (15) zwischen ihm und der ersten Flüssigkeitsleitung, eine distale Kupplungsflüssigkeitsöffnung (19), die zur ersten Flüssigkeitsleitung distal ist, in einem Lagerelement für die Kupplungsöffnung, ein Schiebekupplungsventil (32), das sich über die distale Kupplungsflüssigkeitsöffnung (19) schiebt, ein zweites Kupplungsventil (20), das durch eine erste Federvorrichtung (71) veranlaßt wird, die proximale Kupplungsflüssigkeitsöffnung (15) zu schließen, und wobei das Schiebekupplungsventil (32) durch die zweite Federvorrichtung (72) veranlaßt wird, die distale Kupplungsflüssigkeitsöffnung (19) zu schließen, und erste und zweite Metalldichtungen (81, 82) auf den gegenüberliegenden Seiten der distalen Kupplungsflüssigkeitsöffnung (19) besitzt, und wobei die Metalldichtungen (81, 82) zwischen dem Lagerelement für die Kupplungsöffnung und dem Schiebekupplungsventil (32) abdichten; und
eine Nippelhälfte mit einem Nippelgehäuse, das darin einen Nippeldurchgang für die Flüssigkeit aufweist, wobei der Nippeldurchgang eine proximale Nippelflüssigkeitsöffnung (44) zwischen ihm und einer zweiten Flüssigkeitsleitung, eine distale Nippelflüssigkeitsöffnung (46), die distal zur zweiten Flüssigkeitsleitung ist, in einem Lagerelement für die Nippelöffnung, ein Schiebenippelventil (60), das sich über die distale Nippelflüssigkeitsöffnung (46) schiebt, ein zweites Nippelventil (50), das durch eine dritte Federvorrichtung (73) veranlaßt wird, die proximale Nippelflüssigkeitsöffnung (44) zu schließen, und wobei das Schiebenippelventil (60) durch eine vierte Federvorrichtung (74) veranlaßt wird, die distale Nippelflüssigkeitsöffnung (46) zu schließen, und dritte und vierte Dichtungen (97, 98) auf den gegenüberliegenden Seiten der distalen Nippelflüssigkeitsöffnung (46) besitzt, und wobei die Dichtungen (97, 98) zwischen dem Lagerelement für die Nippelöffnung und dem Schiebenippelventil (60) abdichten;
wobei die Nippelhälfte in die Kupplungshälfte gegen die Wirkung der ersten bis vierten Federvorrichtungen (71, 72, 73, 74) in einer Stellung einsetzbar ist, in der das Schiebekupplungsventil (32) und das Schiebenippelventil (60) zurückgezogen sind, wobei alle Flüssigkeitsöffnungen (15, 19, 44, 46) offen sind und die distale Kupplungsflüssigkeitsöffnung (19) und die distale Nippelflüssigkeitsöffnung (46) in Verbindung sind.

2. Kupplung nach Anspruch 1, bei der die Metalldichtungen (81, 82) einen C-förmigen Querschnitt und einen identischen Durchmesser aufweisen.

3. Kupplung nach Anspruch 1 oder 2, bei der außerdem elastomere Dichtungen vorhanden sind, die zwischen dem Lagerelement für die Kupplungsöffnung und dem Schiebekupplungsventil (32) abdichten.

4. Kupplung nach einem der vorhergehenden Ansprüche, bei der, wenn die Kupplungshälfte und die Nippelhälfte so miteinander verbunden sind, daß alle Flüssigkeitsöffnungen (15, 19, 44, 46) offen sind, der Durchfluß der Flüssigkeit durch die distale Kupplungsflüssigkeitsöffnung (19) und die distale Nippelflüssigkeitsöffnung (46) im wesentlichen senkrecht zur Längsachse der Kupplung erfolgt.

## Revendications

1. Accouplement comprenant:
un demi-accouplement avec un corps d'accouplement ayant un passage d'accouplement pour un fluide provenant d'une première conduite de fluide, le dit passage d'accouplement ayant un orifice proximal pour fluide d'accouplement (15) entre celui-ci et ladite première conduite de fluide, un orifice distal pour fluide d'accouplement (19), écarté de ladite première conduite de fluide dans un élément de support d'orifice d'accouplement, un moyen de vanne coulissante d'accouplement (32) coulissant sur ledit orifice distal pour fluide d'accouplement (19), un deuxième moyen de vanne d'accouplement (20) poussée par un premier moyen de ressort (71) pour fermer ledit orifice proximal pour fluide d'accouplement (15) et ledit moyen de vanne coulissante d'accouplement (32) étant poussée par le deuxième moyen de ressort (72) pour fermer ledit orifice distal pour fluide d'accouplement (19) et un premier et un deuxième joints métallique (81, 82) sur les côtés opposés dudit orifice distal pour fluide d'accouplement (19), lesdits joints métalliques (81, 82) assurant l'étanchéité entre ledit élément support de l'orifice d'accouplement et ledit moyen de vanne coulissante d'accouplement (32); et
un demi-raccord avec un moyen de corps de raccord ayant un passage de raccord dans celui-ci pour ledit fluide, ledit passage de raccord ayant un orifice proximal pour fluide de raccord (44) entre celui-ci et une deuxième conduite de fluide, un orifice distal pour fluide de raccord (46) écarté de la deuxième conduite de fluide dans un élément support d'orifice de raccord, un moyen de vanne coulissante de raccord (60) coulissant sur ledit orifice distal pour fluide de raccord (46), un deuxième moyen de vanne de raccord (50) poussée par un troisième moyen de ressort (73) pour fermer ledit orifice proximal de fluide de raccord (44) et ledit moyen de vanne coulissante de raccord (60) étant poussée par un quatrième moyen de ressort (74) pour fermer ledit orifice distal pour fluide de raccord (46) et des troisième et quatrième joints (97, 98) sur les côtés opposés dudit orifice distal pour fluide de raccord, lesdits joints (97, 98) assurant l'étanchéité entre ledit élément support d'orifice de raccord et ledit moyen de vanne coulissante de raccord (60);
ledit demi-raccord pouvant être inséré dans ledit demi-accouplement contre l'action desdits premier à quatrième moyens de ressorts (71, 72, 73, 74) jusqu'à une position dans laquelle ledit moyen de vanne coulissante d'accouplement (32) et ledit moyen de vanne coulissante de raccord (60) sont en position rétractée, tous lesdits orifices pour fluide (15, 19, 44, 46) sont ouverts et ledit orifice distal pour fluide d'accouplement (19) et ledit orifice distal pour fluide de raccord (46) sont en communication.

2. Accouplement selon la revendication 1, dans lequel les dits joints métalliques (81, 82) ont une section transversale en forme de C et ont le même diamètre.

3. Accouplement selon la revendication 1 ou la revendication 2 dans lequel il existe en outre des joints en matériau élastomère assurant l'étanchéité entre ledit élément support d'orifice d'accouplement et ledit moyen de vanne coulissante d'accouplement (32).

4. Accouplement selon l'une quelconque des revendications précédentes dans lequel ledit demi-accouplement et ledit demi-raccord sont connectés de façon que si tous lesdits orifices pour fluide (15, 19, 44, 46) sont ouverts, l'écoulement du fluide à travers ledit orifice distal pour fluide d'accouplement (19) et ledit orifice distal pour fluide de raccord (46) soit essentiellement perpendiculaire à l'axe longitudinal de l'accouplement.
